# EUROPEAN PATENT APPLICATION

(11) **EP 3 068 096 A1**
(43) Date of publication of application: **14.09.2016**
(21) Application number: 15305378.0
(22) Date of filing: 12.03.2015
(51) Int. Cl.: H04L 29/06

(54) **Method and device for broadcasting a media stream through a telecommunication network within a spatial scope**

(71) Applicant: ALCATEL LUCENT, 92100 Boulogne-Billancourt (FR)
(72) Inventor: Le Razavet, Olivier, 22304 Lannion (FR)
(74) Representative: Loyer & Abello

(57) **Abstract**

A method for broadcasting a media stream (100) through a telecommunication network (1) within a spatial scope, wherein
the telecommunication network connects a plurality of endpoints (31, 32, 33, 41, 42, 43) deployed on a plurality of predefined physical areas each associated with a unique location identifier, wherein
each endpoint has a telecommunication address, which is associated to the location identifier of a predefined physical area (1000) in which the endpoint is physically located,
the method comprising :
- receiving a request (16) comprising a location identifier and a media stream (100),
- selecting a first telecommunication address associated to the location identifier, the first telecommunication address being the telecommunication address of a first endpoint (31), and transmitting a request comprising the first telecommunication address, and transmitting the media stream (100) to the first endpoint,
- repeating the steps of selecting, establishing a session and transmitting the media stream for a second telecommunication address of a second endpoint (42).

## Description

### Field of the present invention

The present invention relates to telecommunications and in particular to methods and devices for broadcasting a media stream through a telecommunication network within a spatial scope.

### Background

Various reasons can lead Policeman, fireman, authority to send a message in order to warn users located in a particular location, as for example to get attention of people living near the location in which a kidnapping occurs and get back witnesses, or to warn people when a tsunami comes suddenly, or even to inform about an event or send publicity information.

Such warning messages can be widely broadcasted through the TV of the radio, but not by a single call to a plurality of personal user equipment as for example mobile and/or phones devices with respect to a predefined physical location.

### Summary

Various embodiments provide a method for broadcasting a media stream through a telecommunication network within a spatial scope, wherein
the telecommunication network connects a plurality of endpoints deployed on a plurality of predefined physical areas, wherein each predefined physical area is associated with a unique location identifier, wherein
each endpoint has a telecommunication address, and
the telecommunication address of an endpoint is further associated to the location identifier of a predefined physical area in which the endpoint is physically located, the method comprising :
- receiving, from an originating user device connected to the telecommunication network, a first request for establishing a first telecommunication session, the first request comprising a location identifier, and
- establishing a first telecommunication session with the originating user device,
- receiving, from the originating user device, a media stream within the established first telecommunication session,
- selecting a first telecommunication address associated to the location identifier, the first telecommunication address being the telecommunication address of a first endpoint, and
- transmitting to the first endpoint a second request for establishing a second telecommunication session, the second request comprising the first telecommunication address,
- establishing a second telecommunication session with the first endpoint,
- transmitting the media stream to the first endpoint within the established second telecommunication session,
- selecting a second telecommunication address associated to the location identifier, the second telecommunication address being the telecommunication address of a second endpoint, and
- transmitting to the second endpoint a third request for establishing a third telecommunication session, the third request comprising the second telecommunication address,
- establishing a third telecommunication session with the second endpoint,
- transmitting the media stream to the second endpoint within the established third telecommunication session.
Thanks to these features, a single easy call is necessary for broadcasting an emergency alert to a plurality of endpoints.

An idea at the basis of the invention is to address an emergency message through a telecommunication network to a physical area.

The media stream may be any kind of media streams, for example voice record, video record, picture, etc. For example, such a message may be a Short Message Service (SMS) or a Multimedia Message Service (MMS) message sent to endpoints as mobile phones.

In an embodiment, the telecommunication address is selected in the list consisting of: mail address, phone number, Internet Protocol (IP) address, username or any string of characters or any identifier designing the address of an endpoint into the telecommunication address.

The endpoints may be any kind of communicating device selected in the list consisting of: voice mail, phones, smartphones, laptop, fixed phones, computer devices, personal assistant, any kind of two-dimensional display, three-dimensional display or four-dimensional display. In an embodiment, the endpoints are mobile devices such as e.g. smartphones and/or laptops and/or connected watch. In an embodiment, the endpoints are fixed devices such as e.g. wired fixed phones, wired computers, and the like.

In embodiment, the predefined area is a cell of the telecommunication network.

In some embodiments, such a method may comprise one or more of the features below:
According to an embodiment, the steps of selecting the first telecommunication address and selecting the second telecommunication address further comprise accessing a look-up table, the look-up table associating, for a plurality of endpoints, the telecommunication address of the endpoint with the location identifier of a physical area in which the endpoint is physically located.

According to an embodiment, the method further comprises, for each telecommunication address which is associated to the location identifier in the look-up table, performing the steps of:
- selecting the telecommunication address,
- transmitting to the selected telecommunication address a request of establishing a telecommunication session, the request being intended for an endpoint having the selected telecommunication address,
- establishing a telecommunication session with the endpoint having the selected telecommunication address, and
- transmitting the media stream to the endpoint within the established telecommunication session.

According to an embodiment, the look-up table further comprises a flag associated to each telecommunication address, the flag being an indicator of a type of the endpoint having the telecommunication address, wherein the type is selected in the list consisting of: mobile, fixed,
the first request further comprises an option parameter, the option parameter indicating a type of the endpoints to which the media stream must be transmitted, wherein the option parameter is selected in the list consisting of: mobile type, fixed type or both mobile type and fixed type, and
the step of selecting a telecommunication address is further performed as a function of the option parameter of the first request, the telecommunication address being selected if the associated flag matches the option parameter.

The method may be implemented with any session establishing protocol. In an embodiment, the protocol is a SIP protocol.

According to an embodiment, the first, second and third requests are Session Initiation Protocol (SIP) requests comprising Request- Uniform Resource Identifiers (R-URI).

According to an embodiment, the location identifier is selected in a list consisting of: a Cell identifier, an INSEE code, a postal code.

According to an embodiment, the telecommunication network is an Internet Multimedia subsystem (IMS) network.

According to an embodiment, the first request is an INVITE SIP request and the R-URI (11) has the following format: sip: location identifier@ host;usage=location;

According to an embodiment, the method further comprises:
terminating the step of transmitting the media stream to the first endpoint prior to starting the step of transmitting to the second endpoint a third request for establishing a third telecommunication session.

According to an embodiment, the method further comprises:
- receiving a message comprising an updated location information and the telecommunication address of an originating endpoint, the location information being related to the physical location of the endpoint,
- selecting a record in the look-up table, the record comprising the telecommunication address contained in the received message,
- storing in the selected record of the look-up table the location identifier which corresponds to the location information contained in the received message.
In an embodiment, the step of receiving the message comprising the updated location is periodically repeated. In another preferred embodiment, the step of receiving the message is staggered over time, e.g. the updating is performed endpoint by endpoint each time an endpoint register and/or communicates via the telecommunication network, thus sending the message.

According to an embodiment, the message is a SIP request comprising an R-URI and the location information is the header of the SIP request, wherein the header is a Private Access Network Information (P-ANI).

According to an embodiment, the method further comprises:
- transcoding the P-ANI into the location identifier.

The invention also provides a broadcasting device for broadcasting a media stream through a telecommunication network within a spatial scope,
the device comprising control means configured for:
- receiving, from an originating user device connected to the telecommunication network, a first request for establishing a first telecommunication session, the first request comprising a location identifier associated to a predefined physical area, and
- establishing a first telecommunication session with the originating user device,
- receiving, from the originating user device, a media stream within the established first telecommunication session,
- selecting a first telecommunication address associated to the location identifier, the first telecommunication address being the telecommunication address of a first endpoint located in the physical area, and
- transmitting to the first endpoint a second request for establishing a second telecommunication session, the second request comprising the first telecommunication address,
- establishing a second telecommunication session with the first endpoint,
- transmitting the media stream to the first endpoint within the established second telecommunication session,
- selecting a second telecommunication address associated to the location identifier, the second telecommunication address being the telecommunication address of a second endpoint located in the physical area, and
- transmitting to the second endpoint a third request for establishing a third telecommunication session, the third request comprising the second telecommunication address,
- establishing a third telecommunication session with the second endpoint,
- transmitting the media stream to the second endpoint within the established third telecommunication session.

In an embodiment, the broadcasting device is an application server in an IMS network.

According to an embodiment, the broadcasting device further comprises a data storage storing a look-up table, the look-up table associating, for a plurality of endpoints:
the telecommunication address of the endpoint with the location identifier of a predefined physical area in which the endpoint is physically located, the broadcasting device being further configured to select the first telecommunication address and second telecommunication address within the look-up table.

According to an embodiment, the control means is further configured to:
- receiving, from an endpoint, a message comprising a location information and the telecommunication address of the endpoint, the location information being related to the physical location of the endpoint,
- transcoding the location information into a location identifier,
- storing the telecommunication address of the endpoint in association with the location identifier in the look-up table.

### Brief description of the drawings

These and other aspects of the present invention will be apparent from and elucidated with reference to the embodiments described hereinafter, by way of example, with reference to the drawings.
- **Figure 1** is a call flow of the establishment of a SIP session between a user device and the application server in order to download the message.
- **Figure 2** is a call flow of the establishment of a SIP session between the application server and a plurality of endpoints in order to broadcast the message.
- **Figure 3** is a schematic of the broadcasting of the message in a telecommunication network.
- **Figure 4** is a call flow of an updating of a database memory of an application server for fixed users.
- **Figure 5** is a call flow of an updating of a database memory of an application server for mobile users.

### Detailed description of the embodiments

The described exemplary embodiment relates to a method for broadcasting a message 100 in a defined physical area, in a SIP (Session Initiation Protocol) supporting network such as an IMS (Internet Multimedia subsystem) network. However, though the invention may be applied within the scope of the IMS network, it may also apply to other network architectures and with other types of protocols.

Session Initiation Protocol (SIP) is a signalling protocol used e.g. for controlling communication sessions, such as voice or video calls over Internet Protocol (IP). The protocol is used for creating, modifying and terminating two-party or multiparty sessions. SIP applications also include video conferencing, streaming multimedia distribution, instant messaging, file transfers and online games. A SIP telecommunications device, e.g. a SIP phone, is a SIP user agent that provides traditional call functions of a telephone, such as dial, answer, reject, hold/retrieve, and call transfer. SIP is implemented as a standard telephony protocol.

SIP is a text-based protocol with syntax similar to that of HTTP. There are two different types of SIP messages: requests and responses. The first line of a request has a method, defining the nature of the request, and a Request-Uniform Resource Identifier (URI), indicating where the request should be sent. The first line of a response has a response code.

For SIP requests, RFC 3261 defines the following methods:
- INVITE: Indicates that an endpoint is invited to participate in a media session.
- ACK: Confirms that the endpoint has received a final response to an INVITE request.

The Request-URI (R-URI) is a destination identifier of a SIP request used for routing the SIP request to a destination endpoint or server. The R-URI is a string of characters which resembles an e-mail address and which is written in the following format, as defined in RFC 3261:
sip: x@y: Port, wherein x is a string of character which represents the username of an endpoint or a call server which is invited to establish a SIP session with a calling user device 2 and y represents the host of the endpoint or call server, which may be a domain or an IP address.

The R-URI is part of a SIP request, for example an INVITE request, as follows: INVITE sip: x@y: Port.

The SIP response types are defined in RFC 3261:
- 100 Trying: Extended search being performed may take a significant time so a forking proxy must send a 100 Trying response
- 180 Ringing: Destination endpoint has received INVITE, and is alerting user of call.
- 200 OK: Indicates the request was successful

One application using SIP is Internet Protocol Multimedia Subsystem (IMS) services. IMS is an architectural framework for delivering Internet Protocol (IP) multimedia services, and it uses a protocol, such as the SIP protocol.

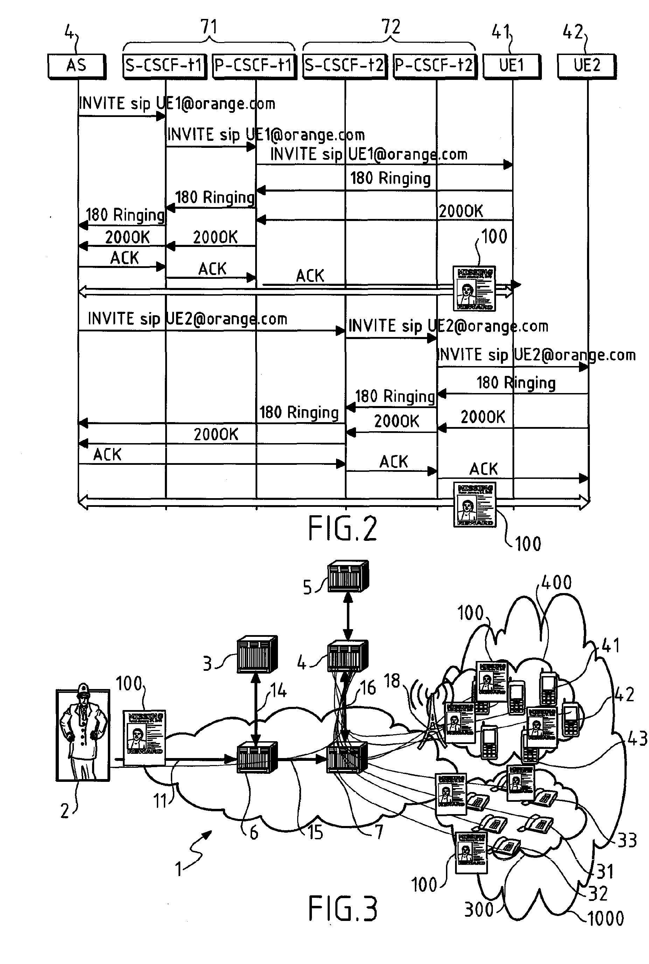

The network 1, illustrated in Figure 3, is such an IMS network which comprises an originating user device 2, a plurality of endpoints 31, 32, 33, 41, 42, 43 connected to the network 1, an originating application server (AS-o) 3, a terminating application server (AS-t) 4, an originating IP call server 6 and a terminating IP call server 7 for transmitting a message through the terminating application server 4. The endpoints 31, 32, 33, 41, 42, 43 may be any kind of telecommunication end user equipment, such as mobile phones, personal digital assistants, fixed phones, computers, laptop etc.

The application servers 3, 4 are able to provide users with many services such as recording, video conferencing, consultation calls, transferring, call shifting between a set of endpoints. The IP call servers 6, 7 are able to route SIP requests from the user device 2 to the application servers 3, 4 and then to the endpoints 31, 32, 33, 41, 42, 43 thanks to Call Session Control Functions (CSCF) comprised in the IP call servers 6, 7.

A method for broadcasting a message 100 through a telecommunication network 1 to a plurality of endpoints in a defined area will be explained hereinafter with reference to a non-limitative example.

The telecommunication network 1 connects a plurality of endpoints deployed on a plurality of predefined physical areas. For the sake of illustration, the telecommunication network 1 is an IMS network in the French state and interconnects endpoints deployed in the whole country. Each predefined physical area is associated with a unique location identifier. In the following example, the location identifier identifies an INSEE code. For the sake of clarity, the only physical area which is represented is the area 1000. Such physical areas may be defined, for example, as the physical area which is delimited and registered in a state by an INSEE code. The area 1000 which is represented in Figure 3 is the area of the French town Lannion and an associated location identifier of Lannion is the following INSEE code: 22300. The other non-pictured physical areas are, for example, all the other towns of the French state which are registered by other INSEE codes.

An authority user, for example a policeman, wants to send an alert message about a kidnapping which has just occurs in the area 1000 to warn all users of the area 1000 being connected to the telecommunication network 1 by endpoints 41, 42, 43, 31, 32, 33. The endpoints are either mobile devices 400 or fixed devices 300. Due to the emergency, the authority user wants to send the alert message by a single call to all the endpoints, either fixed or mobile, of the area 1000.

The authority user uses thus the user device 2, which is for example a computer, to send the alert message.

The method for broadcasting such an alert message to endpoints within a physical area according to an embodiment will now be described in detail.

### Transmitting the alert message to an application server:

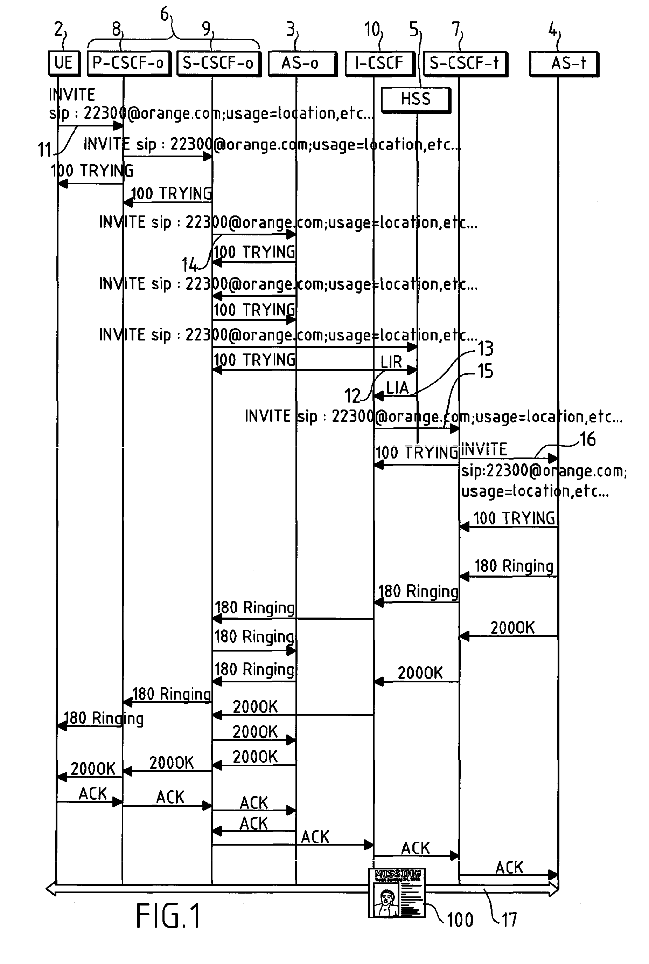

With reference to Figures 1 and 3, the establishment of a SIP session between the user device 2 and the terminating application server (AS-t) 4 will be described.

The user device 2 communicates with a first SIP proxy server, which is an originating Proxy-Call Session Control Function (P-CSCF-o) 8 comprised in the originating IP call server 6. The P-CSCF-o 8 is the first point of contact for the user device 2 in the IMS network 1. The user device 2 sends an INVITE SIP request 11 to the P-CSCF-o 8 as follows:
INVITE sip:22300@orange.com;usage=location;operator-specific-INSEECode

The SIP request 11 requests the P-CSCF-o 8 to establish a telecommunication session between a terminating application server (AS-t) 4 and the user device 2.

The SIP request 11 comprises a parameter:
usage=location
which indicates that the destination of the request 11 is a location instead of being a phone number. The location is the INSEE code 22300.

The P-CSCF-o 8 transmits the SIP request 11 to a second SIP proxy server, which is an originating Serving-Call Session Control Function (S-CSCF-o) 9 also comprised in the originating call server 6.

A Serving-CSCF (S-CSCF-o 9) then triggers an originating application server (AS-o) 3 to control the rights of the user device 2 before to continue the telecommunication session establishment, as represented by arrow 14. Indeed, the possibility to send a SIP request having an R-URI of the special parameter:
usage=location
may be reserved to authority users thanks to Policies. If a non-authorized user tries to send such a request from the user device 2, the AS-o 3 interrupts the telecommunication session establishment.

The S-CSCF-o 9 then will route the session to the I-CSCF when it recognizes such an R-URI which comprises the parameter usage=location.

An I-CSCF is an intermediate SIP function whose IP address is published in the Domain Name System (DNS) of a domain so that remote servers can find it, and use it as a registering point.

The I-CSCF 10 queries a Home Subscriber Server (HSS) 5 to retrieve an address of a terminating S-CSCF (S-CSCF-t) 7 that is in charge of triggering a dedicated AS-t attached to the service. The HSS 5 recognizes the location identifier of the R-URI as a Public Service Identity (PSI) and sends back to the I-CSCF 10 the S-CSCF address attached to this PSI as represented by arrows 12 and 13. The I-CSCF 10 also forwards the SIP request to the S-CSCF-t 7 (arrow 15).

The S-CSCF-t 7 then triggers the AS-t 4 and routes the SIP request 11 to it, as represented by arrow 16.

For the sake of simplicity, the SIP requests of method ACK as well as the SIP responses 100 Trying, 180 Ringing and 200 OK are not described, but are represented more in detail in Figures 1 and 2.

Thanks to all these above described steps, the telecommunication session between the user device 2 and the AS-t 4 is established.

The alert message 100 is then transmitted from the user device 2 to the AS-t 4 within the established telecommunication session, as represented by arrow 17. For example, the alert message is a picture and is transmitted by a RTP protocol.

Below are some examples of SIP R-URI formats which can be used for the establishment of the telecommunication session between the AS-t 4 and the user device 2, in which the R-URI comprises a further parameter depending on options. The options are selected by the authority user when he decides to send the alert message from the user device 2.

In a first example, the option is 3GPP-GERAN and the R-URI resembles to the following example:
R-URI: sip:20801320F518B@orange.com;usage=location;3GPP-GERAN
Mobile Country Code (MCC): 208 (France),
Mobile Network Code (MNC): 01 (Orange),
Local Area Code (LAC) : 320F,
Cell-identifier (CID): 518B

The option selected: 3GPP-GERAN, indicates that the location identifier is a character string which is a concatenation of the MCC, MNC, LAC and CID. The user device 2 sending the request is configured to join all endpoints attached to the location identifier: 20801320F518B.

In a second example, the option is operator-specific-INSEECode and the R-URI resembles to the following example:
R-URI: sip:22300@orange.com;usage=location;operator-specific-INSEECode. The option selected: operator-specific-INSEECode, indicates that the location identifier is an INSEE code. The user device 2 sending the request is configured to join all endpoints attached to the INSEE code: 22300, whatever the type of endpoints (mobile, fixed...).

In a third example, the option is operator-specific-INSEECode-mobile and the R-URI resembles to the following example:
R-URI: sip:22300@orange.com;usage=location;operator-specific-INSEECode-mobile.

The option selected: operator-specific-INSEECode-mobile, indicates that the location identifier is an INSEE code, and that the type of endpoints intended to be joined by the user device 2 is exclusively mobile endpoints, for example mobile phones. The user device 2 sending the request is configured to join all mobile endpoints attached to the INSEE code: 22300. Mobile endpoints may also be defined as endpoints which are connected to the IMS network 1 in a wireless way, for example thanks to an antenna 18.

In a forth example, the option is operator-specific-INSEECode-fixed and the R-URI resembles to the following example:
R-URI: sip:22300@orange.com;usage=location;operator-specific-INSEECode-fixed.

The option selected: operator-specific-INSEECode-fixed, indicates that the location identifier is an INSEE code, and that the type of endpoints intended to be joined by the user device 2 is exclusively fixed endpoints, for example wired phones. The user device 2 sending the request is configured to join all the fixed endpoints attached to the INSEE code: 22300. Fixed endpoints may also be defined as endpoints which are connected to the IMS network 1 in a wired way, for example thanks to a network cable.

In a fifth example, the option is operator-specific-Postalcode and the R-URI resembles to the following example:
R-URI: sip:22300@orange.com;usage=location;operator-specific-Postalcode.

The option selected: operator-specific-Postalcode, indicates that the location identifier is a postal code. The user device 2 sending the request is configured to join all endpoints attached to the postal code: 22300, whatever the type of endpoints (mobile, fixed...).

Additionally to the R.URI presented here above, the user device 2 can be configured to send a SIP request having an R-URI comprising additional parameters in order to:
- identify the message, e.g. message identifier (ID)
- identify the action ordered, e.g. send or stop
- identify the number of sending of the media stream to the endpoint, e.g. number of repeat.

To summarize and to illustrate this possibility, if the user device 2 is configured to send 3 times the media stream of the alert message 100 delivered to the fixed endpoints linked to the 22300 INSEE code area, the SIP INVITE will be composed as follows:
R-URI: sip:22300@orange.com;usage=location;operator-specific-INSEECode-fixed;messageID=XXXX;action=send;repeat:3

Later, if the same user device 2 is configured to stop the sending of the message ID= XXXX to the fixed endpoints identified by the INSEE code 22300 then the R-URI of the SIP request will be:
R-URI: sip:22300@orange.com;usage=location;operator-specific-INSEECode-fixed;messageID=XXXX;action=stop

### Selecting each endpoint which is in the predefined area 1000 associated with the location identifier:

Each endpoint 41, 42, 43, 31, 32, 33 of the IMS network 1 is identified by a telecommunication address. For example, the telecommunication address is a phone number.

Each predefined area of the IMS network 1 is identified by a location identifier. In the example described with reference to the Figures 1 and 3, the location identifier is a postal code.

Therefore, as each endpoint is physically located in a physical area, the endpoint may be associated to the location identifier of the physical area.

The device AS-t 4 as represented in Figure 1 is named terminating application server (AS-t) 4 hereinabove for the sake of clarity. Indeed, the qualification of "terminating" is linked to the function of the AS in the call communication represented in Figure 1. The same AS will be renamed in the following: AS 4 instead of AS-t 4. Indeed, the same AS is not a terminating AS in the call communications represented in Figures 2, 4 and 5 as the function of the same AS is different from terminating for the call communications represented in Figures 2, 4 and 5.

The AS 4 comprises a database memory. The database memory comprises a look-up table in which are stored telecommunication addresses in association with location identifiers of the plurality of endpoints connected through the IMS network 1.

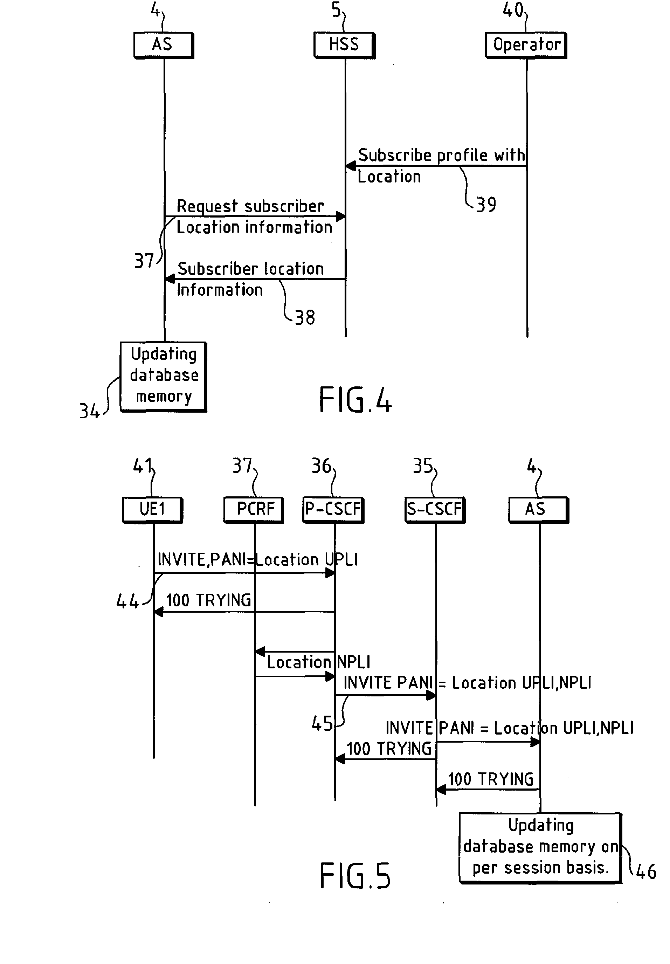

The database memory is regularly updated, as described with reference to Figures 4 and 5.
- With reference to Figure 4, the AS 4 updates the database memory for fixed endpoints.
For fixed endpoints 31, 32, 33, which are e.g. wired endpoints, the subscriber profile with the endpoint location has been configured by operator 40 within the HSS 5, as shown by arrow 39. For example, the following phone number: 0296XXXXXX is stored in the HSS 5 with the following location identifier: 22300. The AS 4 sends periodically a request to the HSS 5 for obtaining the location identifier of the endpoint whose subscriber profile comprises the phone number 0296XXXXXX. The HSS 5 sends back the location identifier 22300 which is stored by the AS 4 in the database memory in a step 34 of updating the database memory.
- With reference to Figure 5, the AS 4 updates the database memory for mobile endpoints.
For mobile endpoints, the location identifier is obtained at each request on the IMS network from the mobile endpoint or from a Policy and Charging Rules Function (PCRF). The location identifier is forwarded, in association with the telecommunication address of the endpoint, from the endpoint to the database memory. The database memory then stores the location identifier in association with the telecommunication address in the look-up table.

For example, the endpoint 41 calls on the IMS network 1. Therefore, the endpoint 41 sends a SIP request 44 to a P-CSCF 36. The SIP request 44 comprises a P-ANI header which comprises a User Provided Location Information UPLI. The P-CSCF 36 then sends a request to a PCRF 37 in order to get back a Network Provided Location Information NPLI. Then, the P-CSCF 36 transmits a SIP request 45 to a S-CSCF 35. The SIP request 45 comprises a P-ANI header which comprises the UPLI and the NPLI. The SIP request 45 is routed to the AS 4. In an updating step 46, the AS 4 stores in the database memory the NPLI and converts the NPLI into the location identifier under INSEE code or Postal code. Both Cell-ID (UPLI and NPLI) and INSEE Code or Postal Code are stored and can be used later on as a location identifier by a calling party as destination to be alerted.
Alternatively, the SIP requests 44 and 45 comprise a location identifier which is converted into a P-ANI header in another format (e.g INSEE code or Postal code) by the call server of the IMS network 1.

Alternatively, the AS 4 requests to be warned of a new location identifier for a mobile endpoint each time the mobile endpoint is moved from a network cell to another.

For example, the following phone number: 0670XXXXXX is stored in the database memory with the following location identifiers: PANI= AccessNetwork3GPP-E-UTRAN;utran-Cell-id-3gpp: 208103565682412 with 208= Mobile Country code, 10= Mobile Network code, 356= Tracking Area code, 56824= ECIeNodeB, 12= ECI Cell-ID and INSEE code: 22300, because the last call from the mobile phone having the phone number 0670XXXXXX has been sent from the town Lannion which has the INSEE code 22300. Two location identifiers are recorded in the database memory for this example: the first one is the Cell Identifier (ID) which allows reaching all the mobile phones of the network cell of Cell-ID= 208103565682412 when used as the location identifier in the R-URI, the second one is the INSEE code 22300, which allows reaching all the mobile phones of the town Lannion when used as the location identifier in the R-URI. The authority user sending the alert message 100 may thus decide of the granularity of the area for broadcasting by configuring the request from the user device 2.

The AS 4 selects from the database memory all the telecommunication addresses associated with the location identifier of the SIP request which is sent for the establishment of a SIP session between the user device 2 and the AS 4.

Additionally, the look-up table further stores a flag on association with each telecommunication address. The flag indicates whether the endpoint whose address is the telecommunication address is a mobile endpoint or a fixed endpoint.

The AS 4 may select from the database memory all the telecommunication addresses not only with regard to their association with the location identifier of the SIP request, but also depending on the options selected for the R-URI, as described in the part of "transmitting a message to an application server". The AS 4 then selects the telecommunication addresses whose associated flag matches the option of the R-URI.

For example, the AS 4 receives a SIP request having the following R-URI:
R-URI: sip:22300@orange.com;usage=location;operator-specific-INSEECode-fixed

The AS 4 will therefore selects in the look-up table all the telecommunication addresses which correspond to the two following criteria:
- the telecommunication address is stored in association with the following location identifier: 22300,
- the telecommunication address is stored in association with a flag which indicates that the related endpoint is a fixed endpoint.

Below is an example of a look-up table in which the AS 4 can select a record associating a telecommunication address with a location identifier and to a flag:

| Telecommunication address | Location identifiers | Flag |
|---|---|---|
| 0670XXXXXX | Fixed-loc: 22300; | Mobile |
| | Mobile-loc: 208103565682412 | |
| 0296XXXXXX | 22300 | Fixed |
| 0145XXXXXX | 75017 | Fixed |

In the table, the options for the location identifier are named as follows: the Cell-ID is called mobile-loc and the INSEE code is called fixed-loc. The two options of location identifiers are stored for the mobile device in the look-up table. In another embodiment, the look-up table may comprise uniquely fixed-loc or uniquely mobile-loc. The AS 4 will then establish telecommunication sessions with all the endpoints whose telecommunication addresses have been selected.

### Transmitting the alert message to endpoints within the predefined area:

The AS 4 will then establish a telecommunication session with each endpoint 31, 32, 33, 41, 42, 44 within the area 1000 as illustrated in Figures 2.

The AS 4 selects a first telecommunication address associated to the location identifier in the database memory. The first telecommunication address is the phone number of a first endpoint 41, which is a smartphone. Then, the AS 4 transmits to the first endpoint 41 a request for establishing a telecommunication session. The request comprises the phone number. The request is relayed by a first instance of S-CSCF (S-CSCF-t1) and of P-CSCF (P-CSCF-t1) in a first instance of call server 71. The AS 4 then establishes a telecommunication session with the first endpoint, and transmits the alert message 100 to the first endpoint within the established telecommunication session.

The AS 4 then selects a second telecommunication address associated to the location identifier in the database memory. The second telecommunication address is the phone number of a second endpoint 42, which is a smartphone. Then, the AS 4 transmits to the second endpoint 42 a request for establishing a telecommunication session. The request comprises the phone number. The request is relayed by a second instance of S-CSCF (S-CSCF-t2) and of P-CSCF (P-CSCF-t2) in a second instance of call server 72. The AS 4 then establishes a telecommunication session with the second endpoint, and transmits the alert message 100 to the second endpoint within the established telecommunication session.

By repeating the above step for each endpoint being associated to the location identifier, the alert message 100 is broadcasted to all the users in the area 1000. When repeating the setup call to the population a specific mechanism is implemented in the AS 4 in order to avoid overload traffic within the IMS network 1.

The selection of all the endpoints 31, 32, 33, 41, 42, 43 within the area 1000 and transmission to the endpoints of the alert message 100 may be simultaneous or, in a preferred embodiment, spread in time in order to prevent an overload on the AS 4 and the IMS network 1. For example, the AS 4 delays the telecommunication sessions with the endpoints on a configurable timer, e.g. one call per second.

The methods described hereinabove may be executed through the use of dedicated hardware as well as hardware capable of executing software in association with appropriate software. When provided by a processor, the corresponding functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included. The various CSCF, the application servers, the HSS 5, the database memory, the user device 2 and endpoints 31, 32, 33, 41, 42, 43 described hereinabove may be implemented in a unitary or a distributed device. For example, any virtualization technique may be used to implement the various devices and functions.

The invention is not limited to the described embodiments. The appended claims are to be construed as embodying all modification and alternative constructions that may be occurred to one skilled in the art, which fairly fall within the basic teaching here, set forth.

Moreover, the invention is not limited to embodiments in which the network comprises only two application servers and may also be applied with any number n of application servers, n being two or more. It is to be understood that, within the scope of the appended claims, the invention may be practiced otherwise than as specifically described herein.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps. The invention may be implemented by means of hardware as well as software. The same item of hardware may represent several "means".

In the claims, any reference signs placed between parentheses shall not be construed as limiting the scope of the claims.

## Claims

1. A method for broadcasting a media stream through a telecommunication network within a spatial scope, wherein
the telecommunication network (1) connects a plurality of endpoints (31, 32, 33, 41, 42, 43) deployed on a plurality of predefined physical areas, wherein each predefined physical area is associated with a unique location identifier, wherein
each endpoint has a telecommunication address, and
the telecommunication address of an endpoint (31, 32, 33, 41, 42, 43) is further associated to the location identifier of a predefined physical area (1000) in which the endpoint is physically located,
the method comprising :
- receiving, from an originating user device (2) connected to the telecommunication network, a first request (16) for establishing a first telecommunication session, the first request comprising a location identifier, and
- establishing a first telecommunication session with the originating user device,
- receiving, from the originating user device, a media stream (100) within the established first telecommunication session,
- selecting a first telecommunication address associated to the location identifier, the first telecommunication address being the telecommunication address of a first endpoint (31), and
- transmitting to the first endpoint (31) a second request for establishing a second telecommunication session, the second request comprising the first telecommunication address,
- establishing a second telecommunication session with the first endpoint,
- transmitting the media stream (100) to the first endpoint within the established second telecommunication session,
- selecting a second telecommunication address associated to the location identifier, the second telecommunication address being the telecommunication address of a second endpoint (42), and
- transmitting to the second endpoint (42) a third request for establishing a third telecommunication session, the third request comprising the second telecommunication address,
- establishing a third telecommunication session with the second endpoint,
- transmitting the media stream (100) to the second endpoint (42) within the established third telecommunication session.

2. The method according to claim 1, wherein the steps of selecting the first telecommunication address and selecting the second telecommunication address further comprise accessing a look-up table, the look-up table associating, for a plurality of endpoints (31, 32, 33, 41, 42, 43) the telecommunication address of the endpoint with the location identifier of a physical area (1000) in which the endpoint is physically located.

3. The method according to claim 2, further comprising, for each telecommunication address which is associated to the location identifier in the look-up table, performing the steps of:
- selecting the telecommunication address,
- transmitting to the selected telecommunication address a request of establishing a telecommunication session, the request being intended for an endpoint having the selected telecommunication address,
- establishing a telecommunication session with the endpoint having the selected telecommunication address, and
- transmitting the media stream to the endpoint within the established telecommunication session.

4. The method according to claim 3, wherein the look-up table further comprises a flag associated to each telecommunication address, the flag being an indicator of a type of the endpoint having the telecommunication address, wherein the type is selected in the list consisting of: mobile, fixed,
the first request further comprises an option parameter, the option parameter indicating a type of the endpoints to which the media stream must be transmitted, wherein the option parameter is selected in the list consisting of: mobile type, fixed type or both mobile type and fixed type, and
the step of selecting a telecommunication address is further performed as a function of the option parameter of the first request, the telecommunication address being selected if the associated flag matches the option parameter.

5. The method according to any of claim 1 to 4, wherein the first, second and third requests are Session Identifier Protocol (SIP) requests comprising Request- Uniform Resource Identifiers (R-URI).

6. The method according to any of claim 1 to 5, wherein the location identifier is selected in a list consisting of: a Cell identifier, an INSEE code, a postal code.

7. The method according to any of claim 1 to 6, wherein the telecommunication network is an Internet Multimedia subsystem (IMS) network.

8. The method according to any of claim 1 to 7, wherein the first request is an INVITE SIP request and the R-URI (11) has the following format: sip: location identifier@ host;usage=location;

9. The method according to any of claim 1 to 8, further comprising:
terminating the step of transmitting the media stream to the first endpoint prior to starting the step of transmitting to the second endpoint a third request for establishing a third telecommunication session.

10. The method according to any of claim 2 to 9, further comprising:
- receiving a message comprising an updated location information and the telecommunication address of an originating endpoint (31, 32, 33, 41, 42, 43), the location information being related to the physical location (1000) of the endpoint,
- selecting a record in the look-up table, the record comprising the telecommunication address contained in the received message,
- storing in the selected record of the look-up table the location identifier which corresponds to the location information contained in the received message.

11. The method according to claim 10, wherein the message is a SIP request comprising an R-URI and the location information is the header of the SIP request, wherein the header is a Private Access Network Information (P-ANI).

12. The method according to claim 11, further comprising:
- transcoding the P-ANI into the location identifier.

13. A broadcasting device (4) for broadcasting a media stream (100) through a telecommunication network within a spatial scope,
the device comprising control means configured for:
- receiving, from an originating user device connected to the telecommunication network, a first request for establishing a first telecommunication session, the first request comprising a location identifier associated to a predefined physical area, and
- establishing a first telecommunication session with the originating user device,
- receiving, from the originating user device, a media stream within the established first telecommunication session,
- selecting a first telecommunication address associated to the location identifier, the first telecommunication address being the telecommunication address of a first endpoint located in the physical area, and
- transmitting to the first endpoint a second request for establishing a second telecommunication session, the second request comprising the first telecommunication address,
- establishing a second telecommunication session with the first endpoint,
- transmitting the media stream to the first endpoint within the established second telecommunication session,
- selecting a second telecommunication address associated to the location identifier, the second telecommunication address being the telecommunication address of a second endpoint located in the physical area, and
- transmitting to the second endpoint a third request for establishing a third telecommunication session, the third request comprising the second telecommunication address,
- establishing a third telecommunication session with the second endpoint,
- transmitting the media stream to the second endpoint within the established third telecommunication session.
